# EUROPÄISCHE PATENTANMELDUNG

(11) **EP 2 674 234 A2**
(43) Veröffentlichungstag der Anmeldung: **18.12.2013**
(21) Anmeldenummer: 13170339.9
(22) Anmeldetag: 04.06.2013
(51) Int. Cl.: B21J 15/02

(54) **Anordnung und Verfahren zum Verbinden von Nietelementen**

(30) Priorität: 11.06.2012 DE 102012209710
(71) Anmelder: Arnold & Shinjo GmbH & Co. KG, 74677 Dörzbach (DE)
(72) Erfinder: Wohlfarth, Uwe, 74575 Schrozberg (DE)
(74) Vertreter: Patentanwälte Ruff, Wilhelm, Beier, Dauster & Partner

(57) **Zusammenfassung**

Eine Anordnung und ein Verfahren zum Verbinden von Nietelementen (5) mit Platten (3) wird vorgeschlagen. Das Nietelement wird mit seinem Schaft (7) in die Öffnung (4) des Plattenelements (3) eingesetzt. Es wird ein Nietelement (5) verwendet, das nur geringfügig über die Gegenseite des Plattenelements (3) vorstößt. Mithilfe einer Matrize (1) erfolgt ein Stauchen des Schafts (7) des Nietelements, was zu einer Aufweitung des Schafts innerhalb der Öffnung (4) des Plattenelements und zu einer radialen Erweiterung auf der Rückseite des Plattenelements führt.

## Beschreibung

Die Erfindung betrifft das Verankern bzw. Befestigen von Nietelementen an einem ein Loch aufweisenden plattenförmigen Elementen.

Es ist bereits eine Anordnung und ein Verfahren zum Befestigen von Nietelementen in einem Plattenelement aus weicherem Material bekannt. Dabei stanzt ein Nietelement in Zusammenwirken mit einer Matrize, die ein Loch aufweist, in dem Plattenelement eine Öffnung. Der herausgetrennte Teil des Plattenelements wird in dem Loch der Matrize aufgenommen. Der Schaft des Nietelements wird zum Teil in der gestanzten Öffnung des Plattenelements durch radiale Verformung festgelegt (DE 10 2009 035 338 A1).

Ebenfalls bekannt ist das Verbinden von Funktionselemente mit Blechen, bei denen das Blech im Bereich des Randes des hergestellten Lochs verformt wird, um dadurch eine formschlüssige Verbindung mit dem eingesetzten Funktionselement einzugehen.

Der Erfindung liegt die Aufgabe zu Grunde, eine Möglichkeit zu schaffen, Nietelemente derart mit einem Plattenelement zu verbinden, dass auf der Rückseite des Plattenelements ein nur geringfügiger Überstand des vernieteten Nietelements auftritt und das Blech im Randbereich des Lochs nicht verformt wird.

Zur Lösung dieser Aufgabe schlägt die Erfindung eine Anordnung mit den Merkmalen des Anspruchs 1, ein Verfahren mit den Merkmalen des Anspruchs 7 und eine Befestigungsanordnung mit den Merkmalen des Anspruchs 14 vor. Weiterbildungen der Erfindung sind Gegenstand der jeweiligen abhängigen Ansprüche.

Die Matrize hat also auf ihrer Anlagefläche, die dem Plattenelement zugewandt ist, eine Vertiefung, die flach ist und vorzugsweise einen angenähert ebenen Boden aufweist. Das Plattenelement wird so ausgerichtet, dass seine Öffnung angenähert gegenüber der flachen Vertiefung der Matrize zentriert ist. Der Schaft des Nietelements hat einen geringfügig kleineren Durchmesser als das Loch in dem Plattenelement. Beim Anpressen des Nietelements gegen den Boden der Vertiefung der Matrize wird der Randbereich der Stirnfläche des Schafts radial nach außen verformt, so dass dadurch ein Formschluss zwischen dem Nietelement und dem Plattenelement hergestellt wird.

In Weiterbildung der Erfindung kann vorgesehen sein, dass die Matrize eine durchgehende in der Anlagefläche vorzugsweise zentrisch innerhalb der Vertiefung ausmündende Öffnung aufweist, deren Durchmesser etwa in Durchmesser des Schafts des Nietelements entspricht. In dieser Öffnung kann dann ein Gegenhalter angeordnet sein, der vorzugsweise in der Öffnung verschiebbar angeordnet und geführt ist.

Insbesondere kann in Weiterbildung vorgesehen sein, dass die Stirnfläche des Gegenhalters in ihrer Form und angenähert auch Größe der Stirnfläche des Schafts des Nietelements entspricht. Der Schaft des Nietelements kann eine von einer ebenen Stirnfläche abweichende Stirnflächenform aufweisen, beispielsweise in Form eines sehr flachen Kegels.

In nochmaliger Weiterbildung der Erfindung kann vorgesehen sein, dass die Öffnung der Matrize einen geringfügig kleineren Durchmesser aufweist als der Schaft des Nietelements.

Erfindungsgemäß kann vorgesehen sein, dass in einer Position, die der Pressposition der Anordnung entspricht, die Stirnfläche des Gegenhalters in ihrem Randbereich bündig in den Boden der Vertiefung der Matrize übergeht.

Die Erfindung schlägt vor, dass in Weiterbildung die flache Vertiefung, die in der Anlagefläche in der Matrize ausgebildet ist, in ihrem Randbereich einen ebenen Boden aufweist.

Beispielsweise kann die Vertiefung in der Anlagefläche der Matrize eine Tiefe von etwa 15 % der Dicke des Plattenelements aufweisen.

Das Nietelement, das mit dem Plattenelement durch ein Fügeverfahren verbunden werden soll, weist einen Nietschaft auf, der nur geringfügig länger ist als es der Dicke des Plattenelements entspricht. Beispielsweise kann der Schaft des Nietelements etwa 15 bis 20 % länger sein als das Plattenelement dick.

Das von der Erfindung vorgeschlagene Verfahren läuft so ab, dass eine Matrize mit einer Anlagefläche für das Plattenelement und einer in der Anlagefläche ausgebildeten flachen Vertiefung vorgehalten wird. Gegenüber der Matrize wird das Plattenelement mit seiner Öffnung ausgerichtet, und auch das Nietelement wird gegenüber der Öffnung des Plattenelements und der Vertiefung der Matrize ausgerichtet. Anschließend wird das Nietelement mit seinem Schaft in die Öffnung des Plattenelements eingesetzt. Dann erfolgt eine Bewegung des Nietelements unter Mitnahme des Plattenelements gegenüber der Matrize. Das Nietelement wird axial verpresst. Es verformt sich dabei in gewissem Ausmaß radial in die flache Vertiefung in der Anlagefläche der Matrize.

In Weiterbildung kann eine Matrize mit einer durchgehenden Öffnung verwendet werden, in der ein Gegenhalter angeordnet wird. Dieser Gegenhalter wird beim Anpressen des Nietelements gegen die Matrize bzw. umgekehrt so positioniert, dass er mit seiner Stirnfläche an der Stirnfläche des Schafts des Nietelements anliegt.

Insbesondere wird der Gegenhalter so positioniert, dass dieser während des Einpressens unverschiebbar mit der Matrize verbunden ist, so dass der Schaft des Nietelements gegen die Matrize und gegen den Niederhalter angepresst wird.

In Weiterbildung der Erfindung kann vorgesehen sein, dass eine Matrize mit einer Öffnung verwendet wird, deren Durchmesser geringfügig kleiner ist als der Durchmesser des Schafts des Nietelements.

Erfindungsgemäß kann in Weiterbildung vorgesehen sein, das während des Ausrichtens des Nietelements und/oder anschließend der Gegenhalter aus Öffnung der Matrize bis in Kontakt mit der Stirnfläche des Schafts des Nietelements heraus bewegt und anschließend zusammen mit dem Nietelement zurückgezogen wird.

Insbesondere kann in Weiterbildung vorgesehen sein, dass der Gegenhalter während des Einpressens des Nietelements gegen die Matrize in einer Position festgehalten wird, in der seine Stirnfläche im Randbereich bündig mit dem Boden der Vertiefung in der Anlagefläche der Matrize verläuft.

Die Erfindung schlägt ebenfalls eine Befestigungsanordnung mit den Merkmalen des Anspruchs 14 vor.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: schematisch die verschiedenen Teile der Anordnung in gegenseitiger Zuordnung;
- Figur 2: die Anordnung der Teile nach dem Ausrichten;
- Figur 3: die Anordnung zu Beginn des Verformungsvorganges;
- Figur 4: in vergrößertem Maßstab das Nietelement in der Position der Figur 3;
- Figur 5: das Ergebnis des Fügevorgangs.

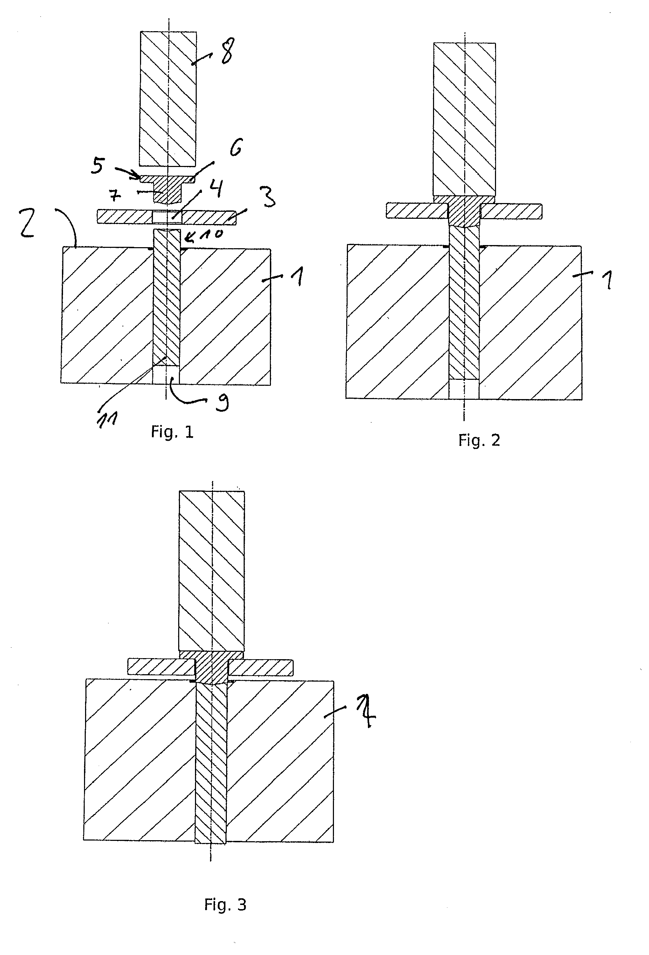

Die Figuren 1 bis 3 zeigen schematische Querschnitte durch die verschiedenen Teile der erfindungsgemäßen Anordnung. Der Fügevorgang erfolgt mithilfe einer Matrize 1, die eine Anlagefläche 2 für das Plattenelement 3 aufweist. Im dargestellten Beispiel handelt es sich um ein ebenes Plattenelement 3, so dass die Matrize 1 auch eine ebene Anlagefläche 2 aufweist. Es sind auch andere Formen möglich, bei denen das erfindungsgemäße Verfahren Anwendung finden kann, beispielsweise eine konkave oder auch konvexe Krümmung der Anlagefläche 2 für ein entsprechend geformtes Plattenelement 3.

Das Plattenelement 3 weist ein Loch 4 auf, beispielsweise ein kreisrundes Loch.

Mit dem erfindungsgemäßen Verfahren soll ein Nietelement 5 an dem Plattenelement 3 angebracht werden, das einen Nietkopf 6 und einen Nietschaft 7 aufweist. Der Nietschaft 7 ist zylindrisch und weist einen Durchmesser auf, der geringfügig kleiner ist als der Durchmesser des Lochs 4. Dadurch lässt sich der Nietschaft 7 in das Loch 4 einführen. Der Nietkopf 6 weist eine ebene Oberfläche auf. Für den Einpressvorgang ist ein Stempel 8 vorgesehen, der eine vordere Stirnfläche aufweist, die etwa der Größe des Nietkopfs 6 entspricht.

In der Matrize 1 ist eine in der Anlagefläche 2 ausmündende zylindrische durchgehende Öffnung 9 vorhanden. Die Mündung dieser durchgehenden Öffnung 9 in der Anlagefläche 2 ist von einer flachen Vertiefung 10 umgeben, die in der Figur 1 kaum zu sehen ist, die aber im Folgenden noch erläutert werden wird.

In der durchgehenden Öffnung 9 ist ein zylindrischer Gegenhalter 11 angeordnet, der innerhalb der Öffnung 9 axial verschoben werden kann. Ein Antrieb zu seiner Verschiebung ist aus Gründen der vereinfachten Darstellung nicht eingezeichnet. Wie man der Figur 1 entnehmen kann, kann der Gegenhalter 11 aus der Matrize 1 über die Anlagefläche 2 hinaus verschoben werden.

Die Figur 1 zeigt die Ausgangsposition der erfindungsgemäßen Anordnung.

Das Plattenelement 3 ist so ausgerichtet, dass seine Öffnung 4 mit der durchgehenden Öffnung 9 der Matrize 1 fluchtet. Auch das Nietelement 5 ist gegenüber der Öffnung 4 im Plattenelement 3 und der Öffnung 9 in der Matrize 1 ausgerichtet. Der Stempel 8 ist schon vorher gegenüber der Matrize 1 ausgerichtet.

Für die Beschreibung des weiteren Verfahrens wird nun auf die Figur 2 Bezug genommen. Das Nietelement 5 wird mit seinem Schaft 7 in die Öffnung 4 des Plattenelements 3 eingesetzt, bis der Nietkopf 6 mit seiner Unterseite auf dem Plattenelement 3 aufliegt. Gleichzeitig oder anschließend oder auch kurz vorher wird der Gegenhalter 11 in Richtung auf den Stempel 8 bewegt, bis seine Stirnfläche die Stirnfläche des Schafts 7 des Nietelements 5 berührt. Diese Position ist in Figur 2 dargestellt.

Jetzt erfolgt eine Annäherung von Stempel 8 und Matrize, wobei beispielsweise der Stempel 8 angetrieben wird und sowohl das Nietelement 5 als auch das Plattenelement 3 mitnimmt, bis die in Figur 3 dargestellte Position erreicht ist. In dieser Position gibt es noch einen Abstand zwischen dem Plattenelement 3 und der für es vorgesehenen Anlagefläche 2. In dieser Position wird der Gegenhalter 11 festgehalten, so dass er sich nicht weiter nach unten verschieben lässt. Die Figur 3 zeigt also die Position zu Beginn des eigentlichen Pressvorgangs.

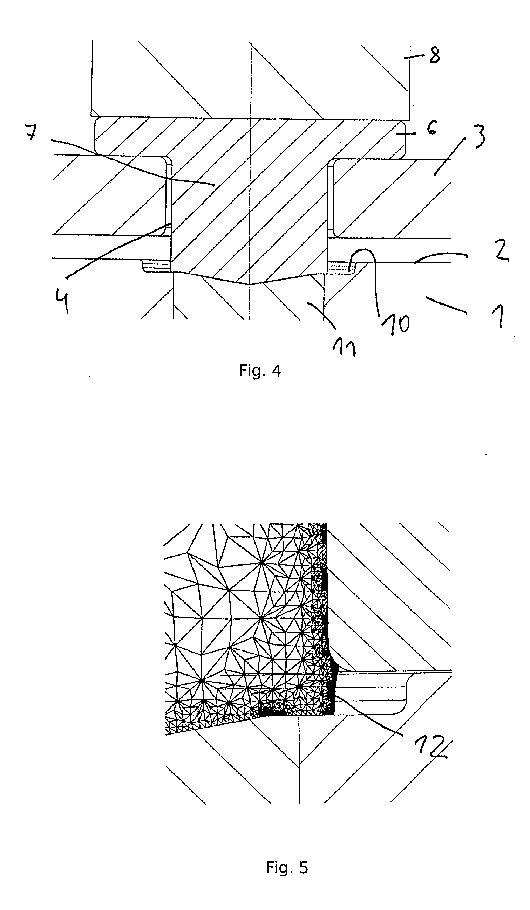

Genauer ist dies in Figur 4 zu sehen, die einen größeren Maßstab verwendet.

Der Nietkopf 6 des Nietelements 5 liegt mit seiner Unterseite auf der Oberseite des Plattenelements 3 an. Der Durchmesser des Schafts 7 des Nietelements ist geringfügig kleiner als der Durchmesser der Öffnung 4 in dem Plattenelement 3. Die Stirnfläche des Schafts 7 des Nietelements 5 weist eine geringfügig von einer ebenen Fläche abweichende Form auf, die man als sehr flachen Kegel bezeichnen kann. Die Stirnfläche des Gegenhalters 11 weist die komplementäre Form auf. Der Durchmesser des Gegenhalters 11 und der ihm aufnehmenden Öffnung 9 der Matrize 1 ist geringfügig kleiner als der Durchmesser des Schafts 7.

Wie es bereits erwähnt wurde, ist in dieser Position der Anordnung, die die Anordnung zu Beginn des Pressvorgangs einnimmt, der Gegenhalter 11 nicht weiter nach unten beweglich.

Bei dem jetzt beginnenden Pressvorgang zwischen dem Stempel 8 und der Verbindung aus Matrize 1 und Gegenhalter 11 erfolgt eine Stauchung des Schafts 7 des Nietelements 5. Dies führt einerseits zu einer radialen Verformung des Schafts innerhalb der Öffnung 4, so dass jetzt der Zwischenraum zwischen dem Schaft 7 und dem Rand der Öffnung 4 im Plattenelement 3 verschwindet. Gleichzeitig wird ein aus der Öffnung 4 herausragender Teil des Schafts 7 auf der Unterseite des Plattenelements 3 innerhalb der Vertiefung 10 radial nach außen verformt und bildet dadurch einen Formschluss 12, der in Figur 5 zu sehen ist. Die Figur 5 zeigt den Querschnitt durch den Schaft 7 mit einer angedeuteten Spannungsverteilung. Der Schaft 7 liegt jetzt direkt an der Wand der Öffnung 4 an.

## Patentansprüche

1. Anordnung zum Verbinden von Nietelementen (5) mit einem eine Öffnung (4) aufweisenden Plattenelement (3), mit
1.1 einer Matrize (1) mit einer von einer Anlagefläche (2) für das Plattenelement (3) ausgehenden flachen Vertiefung (10),
1.2 deren Durchmesser größer ist als der Durchmesser der Öffnung (4) des Plattenelements (3) und der Durchmesser des Schafts (7) des Nietelements (5),
1.3 einer Halterung bzw. Führung für ein gegenüber der Vertiefung (10) der Matrize (1) und der Öffnung (4) des Plattenelements (3) ausgerichtetes Nietelement (5),
1.4 einem Stempel (8) zum Andrücken des Nietelements (5) durch die Öffnung (4) des Plattenelements (3) gegen die Matrize (1), wobei
1.5 die flache Vertiefung (10) gebenüber der Öffnung (4) des Plattenelements (3) derart angeordnet ist, dass sie diese allseits umgibt.

2. Anordnung nach Anspruch 1, bei der die Matrize (1) eine vorzugsweise zentrisch in der Vertiefung (10) ausmündende Öffnung (9) aufweist, deren Durchmesser etwa dem Durchmesser des Schafts (7) des Nietelements (5) entspricht und in der ein Gegenhalter (11) verschiebbar angeordnet ist.

3. Anordnung nach Anspruch 1, bei der die Stirnfläche des Gegenhalters (11) der Stirnfläche des Nietelements (5) entspricht.

4. Anordnung nach Anspruch 2 oder 3, bei der die Öffnung (9) der Matrize (1) geringfügig kleiner ist als der Querschnitt des Schafts (7) des Nietelements (5).

5. Anordnung nach einem der vorhergehenden Ansprüche, bei der die Stirnfläche des Gegenhalters (11) im Randbereich bündig in die Vertiefung (10) der Matrize (1) übergeht.

6. Anordnung nach einem der vorhergehenden Ansprüche, bei der die die Öffnung (9) der Matrize (1) auf ihrer dem Plattenelement (3) zugewandeten Anlagefläche (2) umgebende Vertiefung (10) einen ebenen Boden aufweist.

7. Verfahren zum Verbinden von Nietelementen (5) mit einem eine Öffnung (4) aufweisenden Plattenelement (3), mit folgenden Verfahrensschritten:
7.1 eine Matrize (1) mit einer Anlagefläche (2) für das Plattenelement (3) und einer in dieser Anlagefläche (2) ausgebildeten flachen Vertiefung (10) wird vorbereitet,
7.2 das Plattenelement (3) wird mit seiner Öffnung (4) gegenüber der Vertiefung der Matrize (1) ausgerichtet,
7.3 das Nietelement (5) wird gegenüber der Öffnung (4) des Plattenelements (3) und der Vertiefung der Matrize (1) ausgerichtet,
7.4 das Nietelement (5) wird mit seinem Schaft (7) in die Öffnung (4) des Plattenelements (3) eingesetzt,
7.5 das Nietelement (5) wird axial gegen die Matrize (1) gepresst.

8. Verfahren nach Anspruch 7, bei dem in einer Öffnung der Matrize (1) ein Gegenhalter (11) angeordnet wird, der beim Anpressen des Nietelements gegen die Matrize (1) mit seiner Stirnfläche an der Stirnfläche des Schafts des Nietelements anliegt.

9. Verfahren nach Anspruch 8, bei dem das Nietelement gegen die Stirnfläche des Gegenhalters gepresst wird.

10. Verfahren nach einem der Ansprüche 7 bis 9, bei dem eine Matrize (1) mit einer Öffnung verwendet wird, deren Durchmesser geringfügig kleiner ist als der Durchmesser des Schafts des Nietelements.

11. Verfahren nach einem der Ansprüche 8 bis 10, bei dem während des Ausrichtens des Nietelements und/oder anschließend der Gegenhalter (11) aus der Öffnung der Matrize (1) bis in Kontakt mit der Stirnfläche des Schafts des Nietelements heraus gefahren und anschließend zurückgezogen wird.

12. Verfahren nach einem der Ansprüche 8 bis 11, bei dem der Gegenhalter (11) während des Anpressens des Nietelements gegen die Matrize (1) in einer Position festgehalten wird, in der seine Stirnfläche im Randbereich bündig mit dem Boden der Vertiefung in der Anlagefläche der Matrize (1) verläuft.

13. Verfahren nach einem der Ansprüche 7 bis 12, bei dem der Schaft des Nietelements auf der Rückseite des Plattenelements zur Bildung eines Formschlusses radial in die Vertiefung der Matrize (1) verformt wird.

14. Befestigungsanordnung aus einem ein Loch (4) aufweisenden Plattenelement (3) und einem mit diesem vernieteten, einen Nietkopf (6) und einen Nietschaft (7) aufweisenden Nietelement (5), dessen Nietschaft (7) auf der dem Nietkopf (6) abgewandten Seite des im Randbereich unverformten Plattenelements (3) zur Bildung eines Formschlusses nach außen verformt ist.

15. Befestigungsanordnung nach Anspruch 14, bei der der Nietschaft (7) innerhalb der Öffnung (4) des Plattenelements bis zur Berührung mit dem Rand der Öffnung (4) radial verformt ist.
